# EUROPEAN PATENT APPLICATION

(11) **EP 1 542 336 A1**
(43) Date of publication of application: **15.06.2005**
(21) Application number: 03741470.3
(22) Date of filing: 17.07.2003
(51) Int. Cl.: H02K 3/24

(54) **VEHICLE MOTOR**

(30) Priority: 21.08.2002 JP 2002240411
(71) Applicant: TOYOTA JIDOSHA KABUSHIKI KAISHA, Toyota-shi, Aichi 471-8571 (JP)
(72) Inventor: TAKETSUNA, Yasuji, c/o TOYOTA JIDOSHA K.K., Toyota-shi, Aichi 471-8571 (JP); KATSU, Toshiaki, c/o TOYOTA JIDOSHA K.K., Toyota-shi, Aichi 471-8571 (JP); HARADA, Kenji, c/o TOYOTA JIDOSHA K.K., Toyota-shi, Aichi 471-8571 (JP)
(74) Representative: Leson, Thomas Johannes Alois, Dipl.-Ing.
(86) International application number: PCT/JP2003/009121
(87) International publication number: WO 2004/019468

(57) **Abstract**

A motor (100) having a rotation shaft extending in a horizontal direction and efficiently cooling a stator portion includes a cooling oil inlet (130) provided in a lower portion of the motor (100) in order to introduce the cooling oil supplied from an oil pump (160) through a supply pipe (162), a coil end cover (102) for immersing a stator coil (104) in the cooling oil, a cooling oil discharge outlet (140) provided in an upper portion of the motor (100) in order to discharge the cooling oil from the motor (100), and a discharge pipe (164) connected to the cooling oil discharge outlet (140) for discharging the cooling oil to an oil pan (170).

## Description

### Technical Field

The present invention relates to a structure of a motor, and more particularly to a structure of a liquid-cooled motor mounted on a vehicle such as an automobile.

### Background Art

A motor or a generator mounted on a vehicle such as an automobile includes a rotator (a rotor) and a stator core arranged around the rotor and having a stator coil wound. The motor feeds a current to the stator coil in order to obtain a rotation force, while the generator takes out a current generated by rotation of the rotor and flowing through the stator coil. When the current flows through the stator coil in rotation of the rotor, the stator core or the stator coil generates heat. A cooling device for suppressing such heat is disclosed, for example, in Japanese Patent Laying Open No. 2001-145302.

The cooling device serves as a cooling device for a motor mounted on a vehicle having a rotation shaft extending in a horizontal direction. The motor includes a rotor rotatable around the rotation shaft, a stator core having a plurality of slots facing a peripheral surface of the rotor, and a stator coil wound inside the slot. The cooling device for the motor includes a cooling passage formed by covering an opening of the slot in parallel to the rotation shaft and facing the rotor with a sealing member, an inlet located at one end of the stator core and communicating with the cooling passage in an upper portion, an outlet located at the other end of the stator core and communicating with the cooling passage in a lower portion, and a pump causing a cooling liquid to flow from an inlet chamber toward an outlet chamber in a direction from the upper portion to the lower portion of the motor through the cooling passage.

In this cooling device, the cooling passage is formed by covering the opening of the slot of the stator core extending in parallel to the rotation shaft and facing the rotor with the sealing member. The cooling liquid flows through the cooling passage, so that the stator coil wound inside the slot is directly cooled by the cooling liquid, thereby enhancing a cooling effect. In addition, the cooling liquid flows along the stator coil, so as to attain uniform cooling of the stator coil. Here, as the slot for winding the stator coil is used as the cooling passage, it is not necessary to work a cooling passage separately in the stator core, thereby suppressing cost.

In the cooling device disclosed in the publication described above, however, the cooling liquid flows from the upper portion to the lower portion of the motor having the rotation shaft extending in a horizontal direction, in which case, air remains in the cooling passage. In addition, in order to distribute the cooling liquid to all parts of the stator coil, it is necessary to provide a straightening vane in the cooling passage, which results in a complicated structure. Here, air bubbles are introduced in the cooling passage, and they may cause rusting and deterioration of the stator coil of the motor. Moreover, since the cooling liquid does not directly contact the stator coil due to the air bubbles, cooling performance may be lowered.

In view of the foregoing, an object of the present invention is to provide a motor for a vehicle capable of efficiently cooling a stator portion generating heat from a coil.

Another object of the present invention is to provide a motor for a vehicle capable of uniformly cooling a stator portion generating heat from a coil.

Yet another object of the present invention is to provide a motor for a vehicle without introducing air bubbles present in a cooling liquid to a stator coil in the motor.

Yet another object of the present invention is to provide a motor for a vehicle free from rusting and deterioration of a stator coil in the motor.

### Disclosure of the Invention

A motor for a vehicle according to the present invention includes: a rotor rotating around a horizontal rotation shaft; a stator core having a plurality of slots in a direction of the rotation shaft in a manner facing a peripheral surface of the rotor; a stator coil wound inside the slot; a cooling passage formed such that the stator coil comes in contact with a cooling liquid; feeding means for feeding the cooling liquid through the cooling passage; and a cooling liquid discharge portion provided in an uppermost portion of the cooling passage.

In this manner, the cooling passage implemented by covering the opening of the slot of the stator core with the sealing member is formed, for example, so that the cooling liquid contacts with the stator coil wound in the slot of the stator core facing the rotor. As the cooling liquid flows through the cooling passage, the cooling liquid directly cools the stator coil wound inside the slot, thereby enhancing the cooling effect. In addition, the cooling liquid flows along the stator coil, so as to attain uniform cooling of the stator coil. Here, the cooling liquid discharge portion is provided in the uppermost portion of the cooling passage and the cooling liquid supply portion is provided separately in the lowermost portion, for example, so that the cooling liquid fills the lower portion and then the upper portion, from the supply portion to the discharge portion. Accordingly, introduction of air bubbles is avoided, and the stator coil of the motor is free from rusting and deterioration. Therefore, a motor for a vehicle, in which lowering of the cooling performance due to air bubbles blocking direct contact between the cooling liquid and the stator coil can be avoided, can be provided.

More preferably, in the motor for a vehicle, the cooling passage may include a passage implemented by covering an opening of the slot with a sealing member.

In this manner, as the slot for winding the stator coil is used as the cooling passage, it is not necessary to work a cooling passage separately in the stator core, thereby suppressing cost.

Further preferably, the motor for a vehicle may further include a supply portion of the cooling liquid provided in a lowermost portion of the cooling passage.

In this manner, the cooling liquid is supplied to the cooling liquid supply portion provided in the lowermost portion, for example, by means of a compression transport pump. Then, the cooling liquid passes through the cooling passage formed so as to attain contact between the cooling liquid and the stator coil, and it is discharged from the cooling liquid discharge portion provided in the uppermost portion. Here, the cooling liquid fills the lower portion and then the upper portion, thereby avoiding introduction of the air bubbles.

Further preferably, the feeding means may include pipes connected to the discharge portion and the supply portion respectively, and supply means for supplying the cooling liquid discharged from the discharge portion to the supply portion. The motor for a vehicle may further include prevention means for preventing leakage of the cooling liquid, provided in the pipe.

Here, it is assumed that the vehicle, the engine and the pump stop when the supply means is implemented by the cooling liquid compression transport pump and driven by the engine of the vehicle, for example. Even in such a case, the prevention means prevents leakage of the cooling liquid from the discharge portion, and the cooling passage is still filled with the cooling liquid when the vehicle starts again, thereby attaining desired cooling performance. Since a state in which the cooling passage is filled with the cooling liquid is maintained, air bubbles are not produced in the cooling liquid.

Further preferably, the supply means is implemented by a pump circulating the cooling liquid. The pipe may be provided with storage means for storing the cooling liquid in such a manner that the cooling liquid is in contact with air. The prevention means may be provided at some portion in the pipe from a protruded outlet of the pump to an inlet of the storage means.

In this manner, the cooling liquid circulates by means of the pump. The storage means such as an oil pan temporarily stores the cooling liquid in such a manner that the cooling liquid is in contact with the air. Here, as the prevention means is provided at some portion in the pipe from the protruded outlet of the pump to the inlet of the storage means, the cooling liquid will not leak from the discharge portion.

Further preferably, the prevention means may be provided in the discharge portion.

In this manner, leakage of the cooling liquid can be prevented, for example, by means of a check valve provided in the discharge portion.

Further preferably, the prevention means may be provided in the supply portion.

In this manner, leakage of the cooling liquid can be prevented, for example, by means of a check valve provided in the supply portion.

Further preferably, the motor for a vehicle may be implemented as a distributed winding motor.

In this manner, the distributed winding motor has a thickness at an end portion thereof larger than that in a concentrated winding motor, which means that a contact area between the coil and the cooling liquid larger than in the latter is attained. Excellent cooling performance can be achieved by cooling the end portion.

### Brief Description of the Drawings

Fig. 1 illustrates a structure of a motor according to a first embodiment of the present invention.
Figs. 2A to 2C illustrate a slot portion of a stator.
Fig. 3 shows a structure of a cooling system of the motor according to the first embodiment of the present invention.
Fig. 4 shows a structure of a cooling system of a motor according to a variation of the first embodiment of the present invention.
Fig. 5 shows a structure of a cooling system of a motor according to a second embodiment of the present invention.
Fig. 6 shows a structure of a cooling system of a motor according to a first variation of the second embodiment of the present invention.
Fig. 7 shows a structure of a cooling system of a motor according to a second variation of the second embodiment of the present invention.

### Best Modes for Carrying Out the Invention

In the following, embodiments of the present invention will be described with reference to the figures. It is noted that the same reference characters refer to the same or corresponding components in the figures, and their denotations and functions are also the same. Therefore, detailed description thereof will not be repeated as appropriate.

### First Embodiment

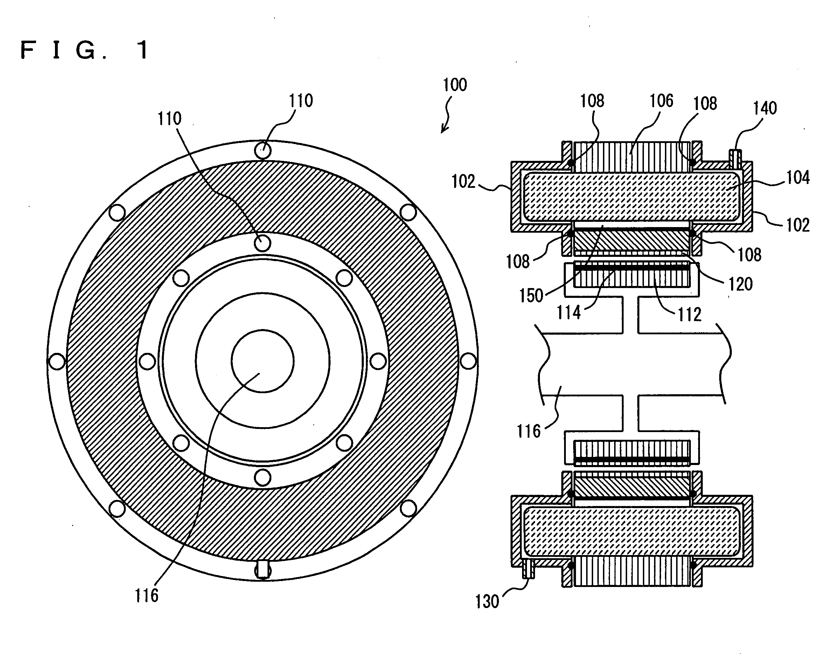

Referring to Fig. 1, a structure of a motor according to the present embodiment will be described. As shown in Fig. 1, a motor 100 is mounted on a vehicle, and used in such a manner that its rotation shaft extends in a horizontal direction. Fig. 1 shows a cross-sectional view and a side view of motor 100. Broadly speaking, motor 100 is constituted of a stator portion and a rotor portion. The stator portion includes a stator core 106 having a coil 104 wound in a slot. The stator portion is covered with a coil end cover 102 surrounding opposing end surfaces of coil 104 and stator core 106 in a cup-shaped manner.

Coil end cover 102 is provided with a cooling oil inlet 130 in its lower portion and a cooling oil discharge outlet 140 in its upper portion. Coil end cover 102 comes in contact with stator core 106, with an O-ring 108 being interposed. Coil end cover 102 is connected to stator core 106 by means of a prescribed number of bolts 110, so as to implement the stator portion.

As will be described later, coil 104 in the stator portion is immersed in a cooling oil. Here, heat exchange is carried out between the cooling oil and coil 104 using the cooling oil as a medium. Then, the cooling oil deprives coil 104 of heat generated therein, so as to cool coil 104 and stator core 106.

The rotor portion includes a rotor core 112 and a magnet 114 contained in the rotor core. The rotor portion has rotor core 112 connected to a rotor shaft 116.

Motor 100 according to the present embodiment carries out heat exchange between the cooling oil and coil 104 of which temperature has been raised by a current flow in coil 104 in the stator portion and stator core 106 of which temperature has been raised by transmission of the heat generated in coil 104 and heat generated by the stator core itself, so as to lower the temperature of the stator portion.

As shown in Fig. 1, motor 100 is used in such a manner that rotor shaft 116 extends in the horizontal direction, and has cooling oil inlet 130 provided in the lowermost portion of the stator portion and cooling oil discharge outlet 140 in the uppermost portion thereof. The oil introduced from cooling oil inlet 130 by means of an oil pump described later fills the lower portion and then the upper portion of the stator portion so as to immerse coil 104 of the stator portion. When the cooling oil is supplied from the oil pump sufficiently to immerse entire coil 104 of the stator portion, the oil is discharged through cooling oil discharge outlet 140. The cooling oil carries out heat exchange through contact with coil 104 in the stator portion.

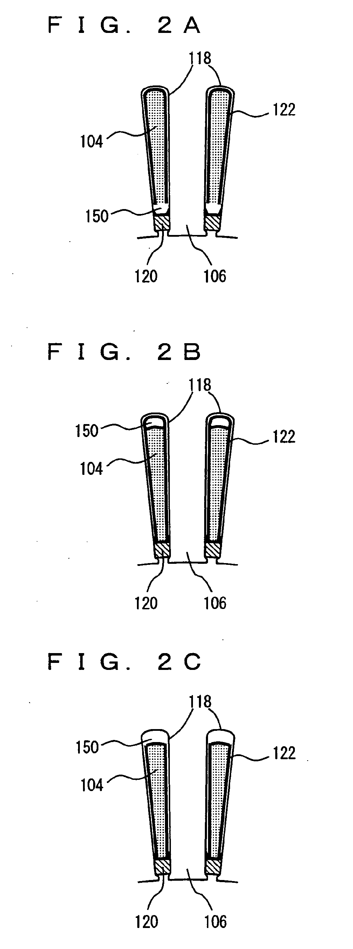

Referring to Figs. 2A to 2C, a slot in motor 100 will be described. In the stator portion, a large number of slots 118 are provided. As shown in Figs. 2A to 2C, slot 118 accommodates coil 104 of the stator portion therein. An insulating paper 122 for insulating the stator portion from coil 104 is provided. In addition, a slot sealing member 120 is provided for each slot, so as to fix coil 104 in slot 118 and to prevent leakage of the cooling oil to the rotor side.

As shown in Fig. 2A, a gap between slot sealing member 120 and coil 104 is used as an oil path 150. Here, the gap used as oil path 150 may be provided in any place in the slot, for example, on an outer diameter side as shown in Fig. 2B. Moreover, as shown in Fig. 2C, oil path 150 may be provided between insulating paper 122 and stator core 106.

Here, a bar-shaped member integrally formed with a lip seal represents one example of slot sealing member 120. Consequently, as shown in Fig. 1, the oil introduced from cooling oil inlet 130 can be discharged from cooling oil discharge outlet 140 located at the other end in parallel to rotor shaft 116.

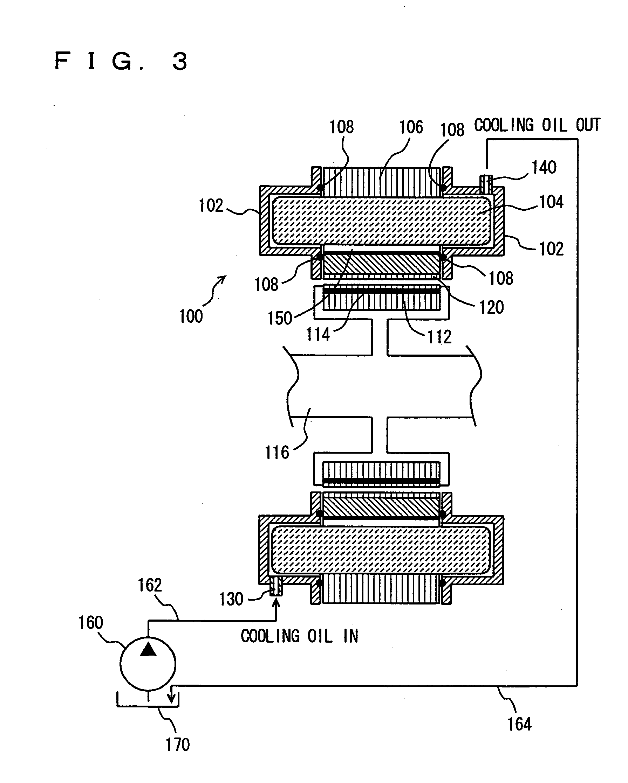

Referring to Fig. 3, a cooling system of motor 100 according to the present embodiment will be described. As shown in Fig. 3, the cooling system of motor 100 includes an oil pump 160, a supply pipe 162 connecting oil pump 160 to cooling oil inlet 130, an oil pan 170, and a discharge pipe 164 connecting oil pan 170 to cooling oil discharge outlet 140. Oil pump 160 is connected to a rotation shaft of the engine, for example, and the oil pump is driven when the engine rotates. The oil supplied from oil pump 160 reaches cooling oil inlet 130 through supply pipe 162. The cooling oil that has reached cooling oil inlet 130 passes through oil path 150 in slot 118 of the stator and diffuses in a direction parallel to rotor shaft 116. In addition, as an amount of oil supplied from oil pump 160 is increased, the cooling oil fills the lower portion and then the upper portion of motor 100.

When oil pump 160 supplies the oil in an amount comparable to the capacity of oil path 150, oil path 150 is completely filled with the cooling oil. If oil pump 160 further supplies the cooling oil, the cooling oil is discharged from cooling oil discharge outlet 140 to discharge pipe 164. The cooling oil discharged to discharge pipe 164 is in turn supplied to oil pan 170. Here, the cooling oil is once stored in oil pan 170 in such a manner that the cooling oil is in contact with air. The cooling oil that has once been stored in oil pan 170 is supplied to motor 100 again by an operation of oil pump 160.

A cooling operation in motor 100 structured as described above will now be discussed.

When the engine rotates, oil pump 160 starts its operation. Oil pump 160 supplies the cooling oil that has once been stored in oil pan 170 to the inside of motor 100 (the stator portion) through supply pipe 162 from cooling oil inlet 130. The cooling oil supplied from oil pump 160 diffuses in a direction parallel to rotor shaft 116 through oil path 150 provided in slot 118 of the stator in motor 100. In addition, the cooling oil supplied from oil pump 160 also fills a space inside coil end cover 102. When the space inside coil end cover 102 and oil path 150 are filled with the cooling oil and when oil pump 160 further continues its operation, the cooling oil is discharged through cooling oil discharge outlet 140 provided at the uppermost portion of motor 100. The discharged cooling oil is returned to oil pan 170 through discharge pipe 164.

As described above, according to the motor in the present embodiment, the cooling oil is supplied by means of the oil pump, and supplied to the space inside the coil end cover and the oil path through the cooling oil inlet located at the lowermost portion of the motor. As the cooling oil discharge outlet is provided at the uppermost portion of the motor, the cooling oil supplied from the oil pump is gradually supplied to the inside of the stator without introduction of air bubbles, and an oil level is raised. When the oil level is raised as high as the cooling oil discharge outlet, the cooling oil discharged through discharge pipe 164 is returned to oil pan 170. As a result, introduction of the air bubbles in the cooling oil is avoided, and the cooling oil directly comes in contact with the stator coil. Therefore, rusting is not caused and deterioration of the motor can be prevented.

### Variation of First Embodiment

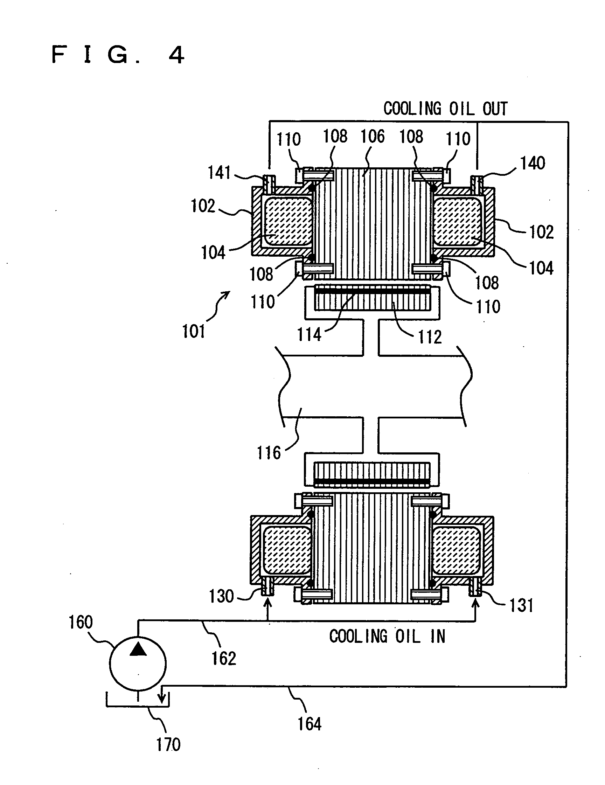

Referring to Fig. 4, a motor according to the present variation will be described. Unlike the motor according to the first embodiment, the motor in the present variation does not have oil path 150 in slot 118. That is, slot 118 cannot be used as an oil path, because it is buried by varnish or by molding, for example.

Referring to Fig. 4, a cooling system in a motor 101 according to the present variation will be described. As shown in Fig. 4, the cooling system of motor 101 according to the present variation is different from the cooling system of motor 100 according to the first embodiment described above in that cooling oil inlets 130, 131 are provided in the lower portion of motor 101 and cooling oil discharge outlets 140, 141 are provided in the upper portion of motor 101. As the structure of the cooling system is otherwise similar to that in motor 100 according to the first embodiment described above, detailed description thereof will not be repeated.

As motor 101 according to the present variation does not have oil path 150 in a direction parallel to rotor shaft 116, two cooling oil inlets and two cooling oil discharge outlets are provided in a direction parallel to rotor shaft 116.

In this manner, even when the oil path is not provided in the slot portion due to varnish, molding or the like, excellent cooling performance can be attained.

### Second Embodiment

In the following, a motor and a cooling system of the same according to the second embodiment of the present invention will be described.

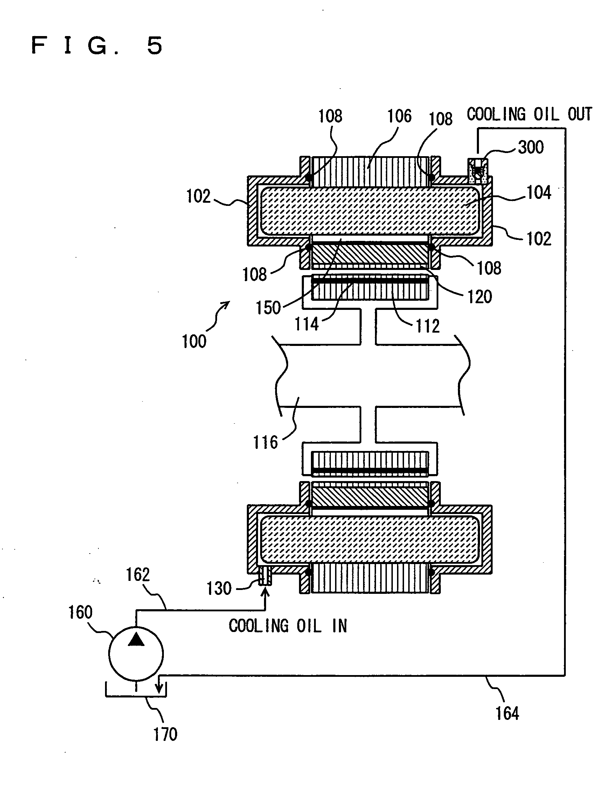

As shown in Fig. 5, in the cooling system of the motor according to the present embodiment, a check valve 300 is provided at cooling oil discharge outlet 140 in the cooling system of the motor according to the first embodiment described above. As the structure of the cooling system is otherwise similar to that according to the first embodiment described above, detailed description thereof will not be repeated.

Check valve 300 is provided between discharge pipe 164 and cooling oil discharge outlet 140, so as to permit oil flow only in a direction from the motor to discharge pipe 164. The cooling oil cannot flow in the opposite direction.

An operation of the cooling system of the motor according to the present embodiment will now be described. When oil pump 160 starts its operation and the cooling oil is supplied to the motor, the oil fills the lower portion and then the upper portion of the motor. The cooling oil fills the space inside coil end cover 102 and oil path 150. When oil pump 160 further supplies the cooling oil, the oil level of the cooling oil is raised as high as cooling oil discharge outlet 140, and the oil is discharged to discharge pipe 164 through check valve 300.

Here, when the operation of oil pump 160 is stopped, supply of the oil from supply pipe 162 to cooling oil supply inlet 130 is stopped. Then, as a pressure of the supplied cooling oil is lowered, the oil and air in discharge pipe 164 tend to return to the inside of the motor. Here, as check valve 300 is provided between the cooling oil discharge outlet and discharge pipe 164, the cooling oil and the air cannot flow in the opposite direction, i.e., toward the inside of the motor. In this manner, even when oil pump 160 is stopped, the inside of the stator of the motor (the space inside coil end cover 102 and oil path 150) can still be filled with the cooling oil.

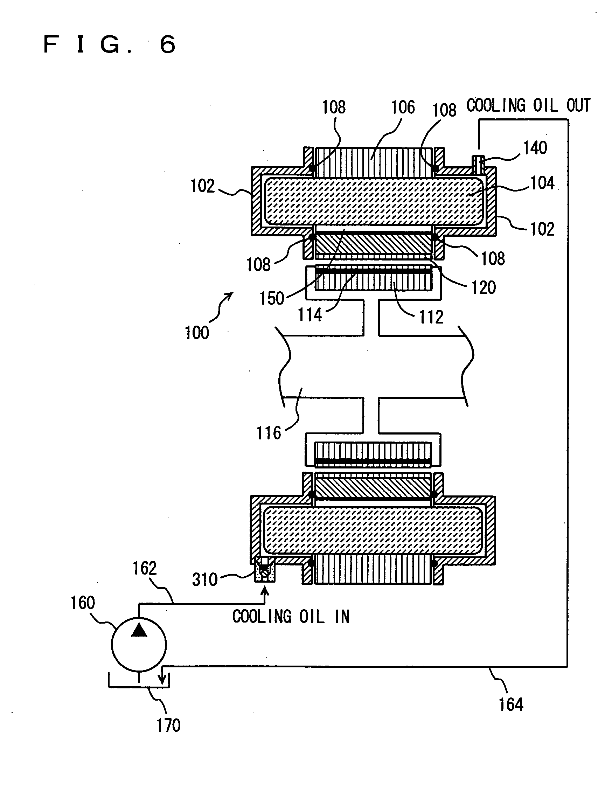

As shown in Fig. 5, a position of check valve 300 is not limited to the position at cooling oil discharge outlet 140. As shown in Fig. 6, a check valve 310 may be provided at cooling oil inlet 130. As shown in Figs. 5 and 6, a position of check valve 300 is not limited to positions at cooling oil discharge outlet 140 and cooling oil inlet 130 of the motor. The check valve may be provided at some portion in discharge pipe 164 or at some portion in supply pipe 162. Such a position is determined depending on a position of cooling oil discharge outlet 140 in a direction of height and a position of a check valve 400 in a direction of height.

### Variation of Second Embodiment

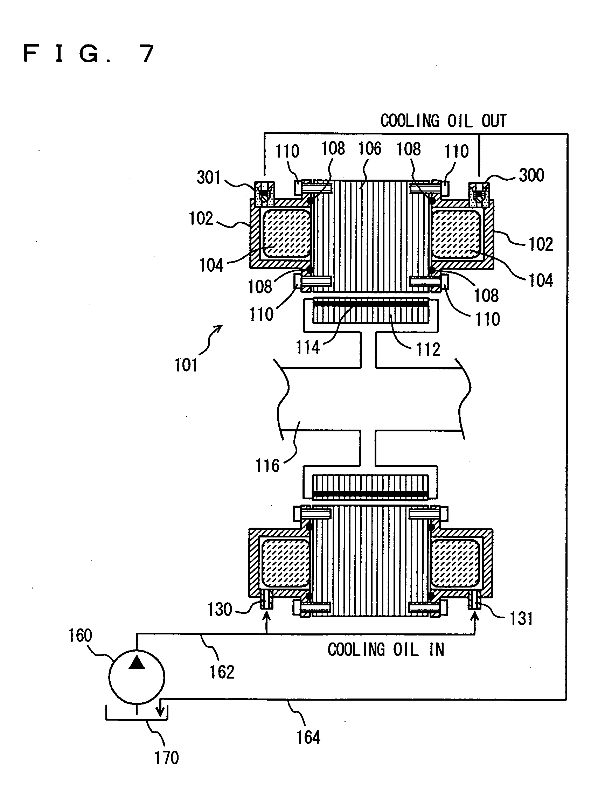

Referring to Fig. 7, a cooling system of a motor according to the present variation will be described. As shown in Fig. 7, check valve 300 is provided at cooling oil discharge outlet 140 in the cooling system of the motor according to the variation of the first embodiment, and check valve 301 is provided at cooling oil discharge outlet 141 thereof. The structure is otherwise similar to that according to the variation of the first embodiment described above. Therefore, detailed description thereof will not be repeated.

In the cooling system of the motor according to the present variation structured as shown in Fig. 7, slot 118 in the stator portion does not have oil path 150. Accordingly, the cooling oil discharge outlets are provided in parallel to rotor shaft 116, while check valves 300, 301 are provided at the respective discharge outlets. Therefore, even when the oil pump stops, contact of coil 104 with the air due to backflow of the oil to the inside of the motor or backflow of air bubbles contained in the oil can be avoided.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

As described above, according to the present motor for a vehicle, the coil in the stator portion can be cooled uniformly and efficiently. In addition, as air bubbles are not introduced in the cooling liquid, the stator portion does not contact with the air, whereby rusting and resultant deterioration of the stator coil can be prevented. Therefore, the motor for a vehicle according to the present invention is suitable for mount on a hybrid vehicle, an electric vehicle, and a fuel cell vehicle.

## Claims

1. A motor for a vehicle comprising:
a rotor (112) rotating around a horizontal rotation shaft (116);
a stator core (106) having a plurality of slots (118) in a direction of said rotation shaft (116) in a manner facing a peripheral surface of said rotor (112);
a stator coil (104) wound inside said slot (118);
a cooling passage (150) formed such that said stator coil (104) comes in contact with a cooling liquid;
feeding means for feeding the cooling liquid through said cooling passage (150); and
a discharge portion (140) of said cooling liquid provided in an uppermost portion of said cooling passage (150).

2. The motor for a vehicle according to claim 1, wherein
said cooling passage (150) includes a passage implemented by covering an opening of said slot (118) with a sealing member (120).

3. The motor for a vehicle according to claim 1, further comprising a supply portion (130) of said cooling liquid provided in a lowermost portion of said cooling passage (150).

4. The motor for a vehicle according to claim 3, wherein
said feeding means includes
pipes connected to said discharge portion (140) and said supply portion (130) respectively, and
supply means (160) for supplying said cooling liquid discharged from said discharge portion (140) to said supply portion (130), and
said motor further comprises prevention means (300, 301, 310) for preventing leakage of said cooling liquid, provided in said pipe.

5. The motor for a vehicle according to claim 4, wherein
said supply means (160) is implemented by a pump circulating said cooling liquid,
said pipe is provided with storage means (170) for storing said cooling liquid in such a manner that said cooling liquid is in contact with air, and
said prevention means (300, 301, 310) is provided at some portion in the pipe from a protruded outlet of said pump to an inlet of said storage means.

6. The motor for a vehicle according to claim 5, wherein
said prevention means (300, 301, 310) is provided in said discharge portion (140).

7. The motor for a vehicle according to claim 5, wherein
said prevention means (300, 301, 310) is provided in said supply portion (130).

8. The motor for a vehicle according to any one of claims 1 to 7, being implemented as a distributed winding motor.
